# NEUE EUROPÄISCHE PATENTSCHRIFT

(11) **EP 1 205 388 B2**
(45) Veröffentlichungstag und Bekanntmachung des Hinweises auf die Entscheidung über den Einspruch: **01.08.2007**
(45) Hinweis auf die Patenterteilung: 10.12.2003
(21) Anmeldenummer: 01120677.8
(22) Anmeldetag: 03.09.2001
(51) Int. Cl.: B65C 9/06

(54) **Vorrichtung zur Steuerung der Drehbewegung von Gefässen**
Device for controlling the rotational movement of containers
Dispositif pour contrôler le mouvement rotatif de conteneurs

(30) Priorität: 09.11.2000 DE 20019062 U
(43) Veröffentlichungstag der Anmeldung: 15.05.2002
(73) Patentinhaber: KHS AG, 44143 Dortmund (DE)
(72) Erfinder: Krämer, Klaus, 44267 Dortmund (DE)
(74) Vertreter: Nunnenkamp, Jörg

(56) Entgegenhaltungen:
- EP-A- 1 041 033
- DE-B- 2 806 080
- DE-T- 68 907 374
- FR-A- 2 341 486
- US-A- 5 000 345

## Beschreibung

Die Erfindung betrifft eine Vorrichtung zur Steuerung der Drehbewegung von Gefäßen nach dem Oberbegriff des Patentanspruchs 1.

Derartige Vorrichtungen werden insbesondere in Verbindung mit Etikettiermaschinen für Gefäße verwendet. Bei der maschinellen Etikettierung werden zu etikettierende Gefäße über eine Fördereinrichtung dem Transportkarussel einer Etikettiermaschine zugeführt. Im Randbereich des Transportkarussels sind drehbar gelagerte Drehteller vorgesehen, auf denen jeweils mittels einer absenkbaren Zentriereinrichtung (auch als "Tulpe" bezeichnet) ein Gefäß auf dem Drehteller festgesetzt wird. Um das Transportkarussel herum sind eine oder mehrere feststehende Etikettierstationen angeordnet, die eine Leimwalze, einen Etikettenbehälter und einen Greiferzylinder zur Etikettenübergabe beinhalten. Des weiteren befindet sich eine Anbürststation an dem Transportkarussel. Für den eigentlichen Etikettiervorgang werden die Gefäße auf dem sich drehenden Transportkarussel an der bzw. an den Etikettierstationen vorbeigeführt, wobei die Gefäße gleichzeitig mit Hilfe der Drehteller relativ zu dem Transportkarussel in einer bestimmten Abfolge von Drehschritten verdreht werden, um die Gefäße zum Aufbringen und Anbürsten der Etiketten in einer bestimmten Winkelausrichtung und mit einer bestimmten Drehgeschwindigkeit bzw. Winkelgeschwindigkeit an den jeweiligen Etikettierstationen vorbeizuführen.

Um die einzelnen Drehteller relativ zum Transportkarussel derart gesteuert verdrehen zu können, ist eine Vorrichtung bekannt, bei der jeder Drehteller mit einem Rollenkreuz gekoppelt ist, das mit einer bezüglich des Transportkarussels verdrehfest angeordneten Steuerkurve in Eingriff steht und diese bei Drehung des Transportkarussels abtastet. Auf dieser stationären Steuerkurve ist die oben genannte Abfolge von Drehschritten als ein "Drehprogramm" gespeichert, indem die Steuerkurve in Form zweier übereinanderliegender Kurven ausgebildet ist, deren An- und Abstieg über das Rollenkreuz in Form einer Drehbewegung mit variierenden Winkelgeschwindigkeiten auf den Drehteller übertragen wird.

Die Steuerkurve kann als ein bezüglich des Rollenkreuzes außenliegender Steuerkurvenkranz ausgebildet sein, wobei das Rollenkreuz die Innenfläche des Steuerkurvenkranzes abtastet. Bei dieser Ausführung ist es nacheilig, daß der Drehteller (wenn auch mit sich verändernden Winkelgeschwindigkeiten) im wesentlichen nur in die zur Drehrichtung des Transportkarussels entgegengesetzte Drehrichtung gedreht werden kann.

Alternativ kann die Steuerkurve als eine bezüglich des Rollenkreuzes innenliegende Steuerkurvenscheibe ausgebildet sein, wobei das Rollenkreuz am Außenumfang der Steuerkurvenscheibe entlangfährt. Auch hier ist es nachteilig, daß der Drehteller (mit variierenden Winkelgeschwindigkeiten) im wesentlichen nur in die Richtung gedreht werden kann, die gleich der Drehrichtung des Transportkarussels ist.

Bei vielen Gefäß- und Etikettenformen ist es jedoch erforderlich, den Drehteller (mit sich ändernden Winkelgeschwindigkeiten) abwechselnd in beide Richtungen drehen zu können. Eine bekannte Lösung besteht darin, die Steuerkurve aus mehreren Teilsegmenten zusammenzusetzen, wobei einige dieser Teilsegmente in Form einer Steuerkurvenscheibe bezüglich des Rollenkreuzes innenliegend und andere Teilsegmente in Form eines Steuerkurvenkranzes bezüglich des Rollenkreuzes außenliegend angeordnet sind, so daß das Rollenkreuz abwechselnd mit den außen- bzw. innenliegenden Teilsegmenten in Eingriff kommt, wobei sich jeweils die Drehrichtung des Rollenkreuzes und somit auch die Drehrichtung des Drehtellers ändert. Der Nachteil dieser Lösung besteht darin, daß das Austauschen und Justieren der einzelnen Teilsegmente kompliziert und sehr zeitintensiv ist.

Eine andere Lösung ist in der DE-OS 31 37 201 offenbart, bei der das Verdrehen eines Drehtellers mit Hilfe eines elektrischen Schrittmotors erfolgt. Die Motoren der einzelnen Drehteller sind mit einer gemeinsamen Steuereinrichtung verbunden, durch die jeder Schrittmotor in Abhängigkeit vom Drehwinkel des Transportkarussels mit den erforderlichen Drehsteuerimpulsen versorgt wird. Die Steuereinrichtung hat einen umschaltbaren, veränderbaren oder austauschbaren Programmspeicher, auf dem das gewünschte Drehprogramm gespeichert ist und abgerufen werden kann.

Es sind ferner Drehtische, auch Rundteller genannt, bekannt, die zum Etikettieren, Verschließen oder Füllen von Flaschen dienen. Dabei werden die über ein Förderband zugeführten Behälter über einen Einlauf-Verteilstern dem Drehtisch zugeführt; auf diesem werden die entsprechenden Arbeiten wie Etikettieren, Füllen oder Verschließen durchgeführt; anschließend werden die Behälter über einen Auslauf-Verteilstern wieder auf das Förderband abgeleitet.

Wenn den bekannten Drehtischen Behälter zugeführt werden, die bezüglich ihrer vertikalen Schnittebene unsymmetrisch sind, wie beispielsweise Kunststoff-Hohlkörper mit einem Griff oder mit einseitig angeordneter Gravur oder mit beidseitig unterschiedlichen Aufdrucken, so tritt das Problem auf, diese Behälter immer in eine genau definierte Lage zur Förderrichtung auszurichten. Beispielsweise sollen Behälter mit einem Griff immer mit dem Griff in Förderrichtung ausgerichtet sein oder ein einseitig zu etikettierender Körper soll immer erst mit der Etikettenseite in einer ganz bestimmten Lage zur Förderrichtung transportiert werden. Um dieses Problem zu lösen, sind schon einem Fördergerät nachgeschaltete Drehvorrichtungen bekannt geworden, die anhand einer Markierung im Boden des Behälters feststellen, ob der Behälter in einer vorher festgelegten Weise ausgerichtet ist, z. B. Griff nach vorn. Steht der Behälter nicht richtig, so wird er mit dieser Drehvorrichtung automatisch entsprechend gedreht. Diese bekannte Drehvorrichtung, die rein mechanisch arbeitet, ist sehr aufwendig in ihrer technischen Ausgestaltung und relativ teuer in der Herstellung.

Es ist ferner bekannt, daß konzentrisch zur Achse des Drehtisches mehrere drehbare und arretierbare Drehteller im Drehtisch gelagert sind und daß mindestens eine Abtasteinrichtung zur Bestimmung der Lage der Behälter auf den Drehtellern und mindestens eine von der Abtasteinrichtung steuerbare Betätigungseinrichtung für die Drehbewegung der arretierbaren Drehteller an der Drehvorrichtung angeordnet sind wie beispielsweise DE-U-7 523 323 offenbart.

Eine derartige Drehvorrichtung ermöglicht das Ausrichten der Behälter in eine definierte Lage zur Fördervorrichtung mit relativ einfachen technischen Mitteln. In baulich einfacher Weise sind die Drehteller an im Drehtisch drehbar gelagerten Hohlwellen angeordnet; an diesen sind koaxial zur Achse der Drehteller drehbar gelagerte Planetenräder vorgesehen, die mit einem gestellfesten, koaxial zur Achse des Drehtisches angeordneten Sonnenrad in Eingriff stehen, und zwischen den Hohlwellen und den Planetenrädern sind jeweils federbelastete Reibungskupplungen angeordnet. Dabei ist an jedem Drehteller eine am Drehtisch gelagerte, federbelastete zweiarmige Klinke angeordnet, die zur Arretierung der Drehteller mit am Umfang der Hohlwelle angeordneten Rasten in Eingriff bringbar ist. Bei dieser Drehvorrichtung rotieren die mit dem Sonnenrad in Eingriff stehenden Planetenräder ständig, wohingegen der Drehteller zusammen mit der Hohlwelle durch die zweiarmige, federbelastete Klinke gesperrt ist. Sobald die Abtasteinrichtung einen nicht richtig ausgerichteten Behälter feststellt, wird von der Abtasteinrichtung über eine Betätigungseinrichtung die Klinke angesteuert, so daß unter Einwirkung der federbelasteten Reibungskupplung der jeweilige Drehteller um beispielsweise 180° geschwenkt werden kann, so daß der Behälter dann die gewünschte Lage zur Förderrichtung einnimmt.

Eine Vorrichtung der eingangs beschriebenen Gestaltung wird auch in der DE-B-28 06 080 beschrieben. Hier geht es um ein Verfahren und eine Einrichtung zum Entfernen von Etiketten und/oder Halsfolien von Leerflaschen. Dazu werden die Leerflaschen vor ihrer Behandlung durch Drehung um ihre Längsachse mit Bezug auf Werkzeuge und/oder Wasserstrahlen ausgerichtet. Zu diesem Zweck sind auf einem Drehkranz zugehörigen Drehtellern zugeordnete Lichtschranken angeordnet, deren Signale zu einem Steuersignal für den Antrieb des betreffenden Drehtellers verarbeitet werden.

Im Rahmen der DE 689 07 374 T2 geht es schließlich um eine Etikettiervorrichtung zum Anbringen von Etiketten an Gegenständen. Dabei soll ein bestimmter, an einem Etikett definierter Punkt mit einer vorbestimmten Position an dem Gegenstand übereinstimmen. Zu diesem Zweck ist unter anderem ein erster Fühler realisiert, um die Position des Gegenstandes an einem Förderer mit Bezug auf die Förderrichtung zu erfassen.

Es ist Aufgabe der vorliegenden Erfindung, eine einfache und möglichst störungsfrei arbeitende Vorrichtung zur Steuerung der Drehbewegung von Gefäßen zu schaffen, mit Hilfe derer die Drehlage der jeweils zu verarbeitenden Flaschen erkannt werden und deren entsprechende Ausrichtung erfolgen kann.

Zur Lösung dieser Aufgabe ist bei einer Vorrichtung der eingangs genannten Art vorgesehen, dass die aktuelle Ausrichtung der Gefäße in Bezug zur Förderrichtung durch Kameras mit einer Rundumsichtaufteilung erfasst wird, wobei ein Rundumbereich von mindestens 360° geprüft wird, und wobei die aktuelle Ausrichtung der Gefäße in einer Steuereinrichtung zur kürzesten Drehung des angetriebenen Drehtellers mit dem Gefäß in dessen gewünschte Behandlungsposition verwertet und dem Stellmotor als Steuersignal vermittelt wird.

Weitere Ausführungsformen der Erfindung ergeben sich aus den Unteransprüchen.

Mit der erfindungsgemäßen Ausgestaltung ist ein optisches Prüfsystem zur Drehlageerkennung von Flaschen vor dem Etikettieren geschaffen, mit welchem eine exakte Positionserkennung und Verbringung in die gewünschte oder erforderliche Position auf einfache Weise und kürzestem Wege gewährleistet ist. Die Einlaufpositionserkennung bzw. Einlaufdrehlage kann anhand der Markierungen auf den Flaschen verzögerungsfrei und berührungslos erfaßt und einem entsprechenden Stellantrieb zur Nachführung der Flaschen in die gewünschte Position übermittelt werden.

Die Erfindung wird im folgenden anhand eines Ausführungsbeispiels erläutert, in der eine Querschnittsansicht der erfindungsgemäßen Vorrichtung gezeigt ist.

Eine Etikettiermaschine hat ein Maschinengehäuse, an dessen Oberseite 1 eine vertikal nach oben ragende Welle 2 angebracht ist. An dieser Welle 2 ist ein Transportkarussel 3 drehbar angetrieben gelagert, in dessen Randbereich gleichmäßig über Umfang verteilt mehrere Drehteller 4 drehbar gelagert sind. Oberhalb des Transportkarussels 3 ist an der Welle 2 eine Trägerscheibe (nicht gezeigt) drehbar gelagert, in der mehrere drehbare Zentrierstempel bzw. Tulpen 5 gesteuert heb- und senkbar angeordnet sind. Die Trägerscheibe wird mit der gleichen Geschwindigkeit angetrieben wie das Transportkarussel 3, wobei sich immer eine Tulpe 5 über einem zugehörigen Drehteller 4 befindet.

Bei Betrieb der Etikettiermaschine werden die zu etikettierenden Gefäße 6 über eine Fördereinrichtung 7 dem Transportkarussel 3 zugeführt und einzeln in einer bestimmten Ausrichtung auf einen Drehteller 4 geleitet. Anschließend wird die sich über dem Drehteller 4 befindliche Tulpe 5 abgesenkt, um die Gefäße 6 fest zwischen dem Drehteller 4 und der Tulpe 5 einzuspannen.

An der Unterseite des Transportkarussels 3 ist für jeden Drehteller 4 ein Getriebe und/oder Stellmotor 8 vorgesehen, der mit dem jeweiligen Drehteller 4 verbunden ist.

Für den Etikettiervorgang, das heißt zum Aufbringen und Anbürsten der Etiketten, muß das zu etikettierende Gefäß 6 bezüglich einer Etikettierstation in einem bestimmten Winkel ausgerichtet sein und mit einer ganz bestimmten Winkelgeschwindigkeit an der Etikettierstation vorbeigeführt werden. Gerade bei langen Etiketten kann es zum Beispiel erforderlich sein, ein Gefäß zunächst mit einer Linksdrehung und direkt anschließend mit einer Rechtsdrehung an der Etikettierstation vorbeizuführen. Dabei ist es unbedingt erforderlich, daß beim Aufbringen und Anbürsten der Etiketten sowohl die Winkelausrichtung als auch die Winkelgeschwindigkeiten sehr präzise eingehalten werden und reproduzierbar sind.

Es kann hierzu, soweit erforderlich, neben dem Drehteller 4 eine kurvengesteuerte Arretiereinrichtung 9 vorgesehen sein. Diese Arretiereinrichtung 9 enthält eine an dem Transportkarussel 3 befestigte Halterung 10, in der ein Arretierstift 11 horizontal verschiebbar ist. Das eine Ende des Arretierstiftes 11 ist dazu ausgestaltet, um mit in der Umfangsfläche des Drehtellers 4 ausgebildeten Bohrungen einzugreifen, während das andere Ende des Arretierstiftes 11 mit einer bezüglich des Transportkarussels 3 verdrehfest angeordneten Steuerkurve 12 in Eingriff steht. Die Steuerkurve 12 ist dabei so ausgestaltet, daß der Arretierstift 11 während des Schaltens des Stellmotors 8 radial nach außen bewegt wird, um in eine der Bohrungen des Drehtellers 4 einzugreifen und den Drehteller 4 an einer unkontrollierten Drehbewegung zu hindern. Sobald eine Drehung erforderlich wird, wird der Arretierstift 11 zurückgezogen, damit der Drehteller 4 wieder mit dem Stellmotor angetrieben werden kann.

Zur Steuerung der Drehbewegung der Gefäße 6 und deren Ausrichtung in eine bestimmte Lage ist mindestens eine Abtasteinrichtung zur Bestimmung der Lage der Gefäße vorgesehen. Hierzu wird die Position der Gefäße 6 in einer zur Fördervorrichtung definierten Lage erfaßt und in einer Steuereinrichtung zur zweckmäßig kürzesten Drehung des von dem Stellmotor 8 angetriebenen Drehtellers 4 verwertet. Die Steuereinrichtung vermittelt dem Stellmotor 8 die entsprechenden Steuersignale zur Drehung des Drehtellers 4 mit dem Gefäß 6 in die gewünschte Behandlungsposition. Diese kann dann, soweit erforderlich, durch einen Arretierstift 11 kurzfristig festgesetzt werden. Als Prüfsystem kann ein multifunktionales System vorgesehen sein. Auch kann ein multifunktionales Prüfsystem mit Kameras mit einer entsprechenden Rundumsichtaufteilung angeordnet sein.

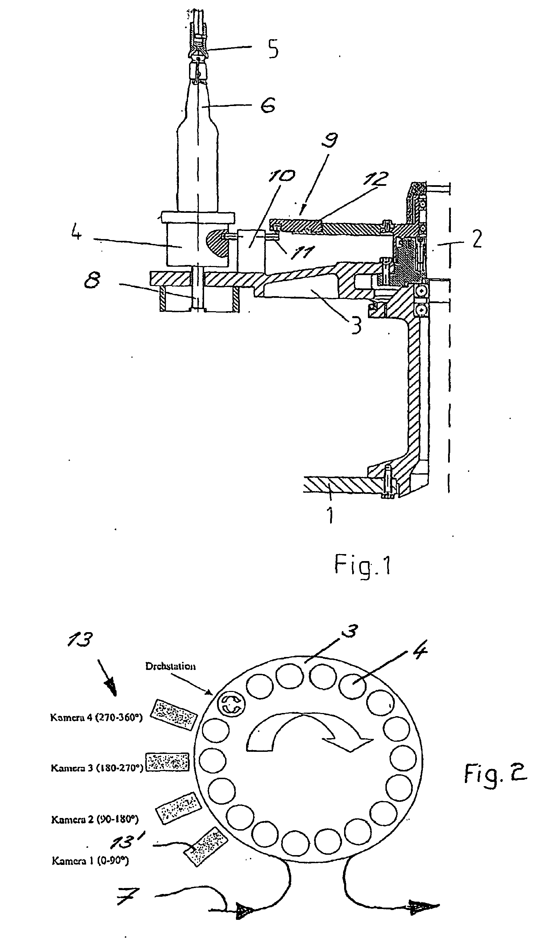

Gemäß dem in Figur 2 dargestellten Ausführungsbeispiel sind vier Kamerasysteme 13 angeordnet, von der jede einen bestimmten Prüfbereich als Teilsegment des gesamten Prüfbereichs übernimmt. Dabei wird ein Rundumbereich von mindestens 360° beschrieben. Die einzelnen Prüfergebnisse werden als gemeinsames Ansteuerungsergebnis zur vorzugsweise kürzesten Drehlagenkorrektur an den Stellmotor weitergeleitet. Jede Kamera 13' prüft z. B. einen Bereich von ca. 100° mit entsprechender Überlappung und wertet eine Teilinformation des Umfangs aus. Nachdem alle vier Kamerasysteme durchlaufen sind, sendet das Prüfsystem die Größe der gewünschten Drehlagenkorrektur an den Stellantrieb, der dann die Drehlagenkorrektur durchführen kann.

## Patentansprüche

1. Vorrichtung zur Steuerung der Drehbewegung von Gefäßen (6) und deren Ausrichtung in eine zur Förderrichtung definierte Lage, mit mehreren motorisch angetriebenen Drehtellern (4) eines Drehtisches einer Flaschenbehandlungsmaschine sowie mindestens einer Abtasteinrichtung (13') zur Bestimmung der Ausrichtung der Gefäße (6),
**dadurch gekennzeichnet, dass**
- die aktuelle Ausrichtung der Gefäße (6) in Bezug zur Förderrichtung durch Kameras (13, 13') mit einer Rundumsichtaufteilung erfasst wird, wobei
- ein Rundumbereich von mindestens 360° geprüft wird, und wobei
- die aktuelle Ausrichtung der Gefäße (6) in einer Steuereinrichtung zur kürzesten Drehung des angetriebenen Drehtellers (4) mit dem Gefäß (6) in dessen gewünschte Behandlungsposition verwertet und dem Stellmotor (8) als Steuersignal vermittelt wird.

2. Vorrichtung nach Anspruch 1, **dadurch gekennzeichnet, dass** vier Prüfkameras (13, 13') vorgesehen sind und jede einen entsprechenden Umfangswinkelbereich überprüft.

3. Vorrichtung nach Anspruch 1 oder 2, **dadurch gekennzeichnet, dass** jeder Kamera (13, 13') ein Prüfbereich von mindestens 180° zugeordnet ist.

4. Vorrichtung nach einem der Ansprüche 1 bis 3, **dadurch gekennzeichnet, dass** die von den Kameras (13, 13') erfassten Prüfergebnisse in ihrer Gesamtheit als Ansteuerungsergebnis zur kürzesten Drehlagenkorrektur an den Stellmotor (8) leitbar sind.

## Claims

1. A device for controlling the rotary motion of containers (6) and their alignment in a defined position relative to the conveyance direction, with several motor-driven rotary tables (4) of a bottle-handling machine as well as a run-off device (13') for determining the alignment of containers (6),
**characterised in that**
- the current alignment of the container (6) in relation to the conveyance direction is detected by the cameras (13, 13') with an all-round view, whereby
- an all-round range of at least 360° is checked, and whereby
- the current alignment of the containers (6) is utilised in a control device for the shortest rotation of the driven rotary tables (4) with the container (6) in its desired handling position and transmitted to the actuating motor (8) as a control signal.

2. The device according to Claim 1 **characterised in that** four test cameras (13, 13') are provided and each checks a corresponding angle at circumference.

3. The device according to Claim 1 or 2 **characterised in that** each camera (13, 13') is assigned to a test range of at least 180°.

4. The device according to one of the Claims 1 to 3 **characterised in that** the test results detected by cameras (13, 13') in their entirety as a driving result for the shortest rotary position correction can be transmitted to the actuating motor (8).

## Revendications

1. Dispositif pour commander le mouvement de rotation de récipients (6) et leur orientation dans une position définie par rapport à la direction de convoyage, comprenant plusieurs plateaux rotatifs entraînés (4) d'une table rotative d'une machine de traitement de bouteilles ainsi qu'au moins un dispositif de balayage (13') pour déterminer l'orientation des récipients (6),
**caractérisé en ce que** :
- l'orientation actuelle des récipients (6) en référence à la direction de convoyage est saisie par des caméras (13, 13') présentant une répartition panoramique, dans lequel
- une plage panoramique d'au moins 360° est vérifiée, et dans lequel
- l'orientation actuelle des récipients (6) est évaluée dans un dispositif de commande pour la rotation la plus courte du plateau rotatif entraîné (4) avec le récipient (6) dans la position de traitement désirée de ce dernier et est communiquée au moteur de positionnement (8) comme signal de commande.

2. Dispositif selon la revendication 1, **caractérisé en ce que** quatre caméras de contrôle (13, 13') sont prévues et **en ce que** chacune vérifie une plage angulaire circonférentielle correspondante.

3. Dispositif selon l'une ou l'autre des revendications 1 et 2, **caractérisé en ce qu'**une plage de contrôle d'au moins 180° est attribuée à chaque caméra (13, 13').

4. Dispositif selon l'une des revendications 1 à 3, **caractérisé en ce que** les résultats de contrôle saisis par les caméras (13, 13') peuvent être acheminés dans leur globalité vers le moteur de positionnement (8) comme résultat de commande pour la correction la plus courte de la position de rotation.
